# EUROPÄISCHE PATENTSCHRIFT

(11) **EP 2 866 039 B1**
(45) Veröffentlichungstag und Bekanntmachung des Hinweises auf die Patenterteilung: **25.05.2016**
(21) Anmeldenummer: 13190375.9
(22) Anmeldetag: 25.10.2013
(51) Int. Cl.: G01R 31/02, H02H 11/00

(54) **Mehrphasiges Schaltersystem mit einer Kurzschlussverbindung**
Multiphase switch system with a short circuit connection
Système de commutateur à plusieurs phases doté d'une liaison de court-circuit

(43) Veröffentlichungstag der Anmeldung: 29.04.2015
(73) Patentinhaber: ABB Technology AG, 8050 Zürich (CH)
(72) Erfinder: Zehnder, Lukas, 5405 Baden-Dättwil (CH); Nohl, Andreas, 8248 Uhwiesen (CH)
(74) Vertreter: ABB Patent Attorneys

(56) Entgegenhaltungen:
- WO-A1-2012/171694
- ABB: "Generator Circuit Breaker HECS", , 26. Oktober 2011 (2011-10-26), XP002721841, Gefunden im Internet: URL:http://www05.abb.com/global/scot/scot2 45.nsf/veritydisplay/d3e2d8908070c731c1257 935003f8f8d/$file/hecs_1hc0072302aa_en_hig h.pdf [gefunden am 2014-03-17]

## Beschreibung

### TECHNISCHES GEBIET

Die vorliegende Erfindung bezieht sich auf ein Schaltersystem nach dem einleitenden Teil von Patentanspruch 1.

Ein solches Schaltersystem enthält mehrere Phasenleiter, einen Leistungsschalter mit mehreren Schalterpolen und eine Kurzschlussverbindung, die einen Sternpunkt und mehrere im Sternpunkt zusammengeführte Verbindungsleiter aufweist. Mit einem solchen Schaltersystem können mit Hilfe der Kurzschlussverbindung bei Inbetriebnahme von Kraftwerken oder Schaltanlagen Sicherheitseinstellungen überprüft und mögliche Fehlerfälle simuliert werden.

### STAND DER TECHNIK

Ein Schaltersystem der vorgenannten Art ist in der Produktbroschüre "Generator Circuit-Breaker Systems HECS" der Fa. ABB Schweiz AG, Zürich/Schweiz (1 HC0072302 E02/AA09) beschrieben. Das beschriebene Schaltersystem ist als Generatorschaltersystem ausgebildet und weist wahlweise eine von zwei Kurzschlussverbindungen auf, von denen die eine manuell montierbar und die andere motorisch betätigbar ausgebildet ist. Das Einrichten beider Kurzschlussverbindungen benötigt geschultes Montagepersonal und ist daher vergleichsweise aufwendig und zeitraubend.

### DARSTELLUNG DER ERFINDUNG

Der Erfindung, wie sie in den Patentansprüchen angegeben ist, liegt die Aufgabe zugrunde, ein Schaltersystem der eingangs genannten Art zu schaffen, das die Durchführung von Simulationsversuchen mit Hilfe einer Kurzschlussverbindung in zeit- und kostensparender Weise ermöglicht.

Gemäss der vorliegenden Erfindung wird ein Schaltersystem bereitgestellt enthaltend mehrere Phasenleiter, einen Leistungsschalter mit mehreren Schalterpolen und eine Kurzschlussverbindung, die einen Sternpunkt und mehrere im Sternpunkt zusammengeführte Verbindungsleiter aufweist, wobei jeder der Phasenleiter mit jeweils einem der Schalterpole elektrisch leitend verbunden ist, und wobei jeder Verbindungsleiter über jeweils einen von mehreren mit Kurzschlussstrom belastbaren ersten Trennschaltern mit jeweils einem der Phasenleiter elektrisch leitend verbunden ist. Dieses Schaltersystem enthält ferner einen zweiten Trennschalter, der beim Schliessen den Sternpunkt elektrisch leitend mit Erde verbindet und der bei Belastung der Kurzschlussverbindung mit einem Kurzschlussstrom geöffnet ist.

Beim Schaltersystem nach der Erfindung können Simulationsversuche, welche der Überprüfung der Sicherheitseinstellungen von Kraftwerken oder Schaltanlagen oder der Nachbildung von Fehlerfällen dienen, zentral von einer Schaltwarte aus durchgeführt werden. Daher entfällt der Einsatz von geschultem Montagepersonal und werden so zum einen Montagekosten eingespart. Zum anderen werden so zugleich auch durch Montage- und Demontagearbeiten bedingte Ausfallzeiten des Schaltersystems vermieden.

Im Schaltersystem nach der Erfindung kann der zweite Trennschalter so ausgebildet sein, dass er mit einem Erderstrom belastbar ist, der kleiner bemessen ist als ein in der Kurzschlussverbindung maximal zulässiger Kurzschlussstrom.

Mit Vorteil können die ersten Trennschalter und der zweite Trennschalter jeweils einen von einer Leitzentrale aus ansteuerbareren Antrieb zum Öffnen und Schliessen einer Trennstrecke aufweisen, können die Phasenleiter, die Schalterpole des Leistungsschalters und die ersten Trennschalter in einer geerdeten Kapselung angeordnet sein, kann der Sternpunkt ausserhalb der Kapselung angeordnet sein, kann jeder der Verbindungsleiter elektrisch isoliert aus der Kapselung geführt sein, und kann bei geschlossenem zweitem Trennschalter jeder der ersten Trennschalter jeweils einer von mehreren Erdungsschaltern des Schaltersystems bilden.

Das Schaltersystem nach der Erfindung kann zum Einbau in eine zwischen einem Generator und einem Transformator angeordnete Generatorableitung vorgesehen werden, wobei jeder der Verbindungsleiter einen generatorseitigen Abschnitt jeweils eines der Phasenleiter über jeweils einen der ersten Trennschalter mit dem Sternpunkt elektrisch leitend verbindet. Der zweite Trennschalter kann dann als Mittel- oder als Niederspannungsschalter ausgebildet sein.

Das Schaltersystem nach der Erfindung kann auch zum Einbau in eine gasisolierte metallgekapselte Hochspannungsschaltanlage vorgesehen sein. Der zweite Trennschalter kann dann als Hochspannungsschalter ausgebildet sein.

### KURZE BESCHREIBUNG DER ZEICHNUNGEN

Anhand von Zeichnungen wird die Erfindung nachfolgend näher erläutert. Hierbei zeigt:

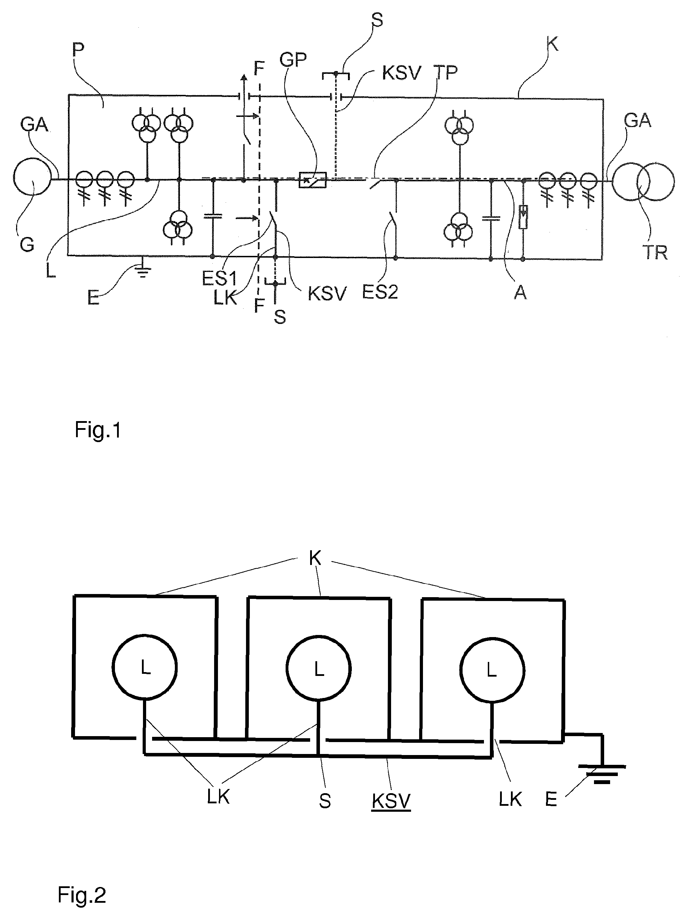

- Fig.1: eine Einphasendarstellung eines mehrphasigen Schaltersystems nach dem Stand der Technik, welches als dreiphasiges Generatorschaltersystem ausgebildet ist und drei in einer geerdeten Kapselung angeordnete Pole des Schaltersystems aufweist, die im Zuge einer längs einer Achse ausgerichteten Generatorableitung zwischen einem Generator eines Kraftwerks und einem Transformator eines Hochspannungsübertragungsnetzes angeordnet sind,
- Fig.2: eine Aufsicht in Pfeilrichtung auf einen senkrecht zur Achse entlang F-F geführten Schnitt durch eine weitgehend formtreu dargestellte Ausführungsform des Schaltersystems nach Fig.1 mit einer manuell montierbaren Kurzschlussverbindung, aus welchem Schnitt die geometrische Ausbildung und Anordnung der Kapselung sowie der Phasen und einer Kurzschlussverbindung dieses Schaltersystems ersichtlich sind,

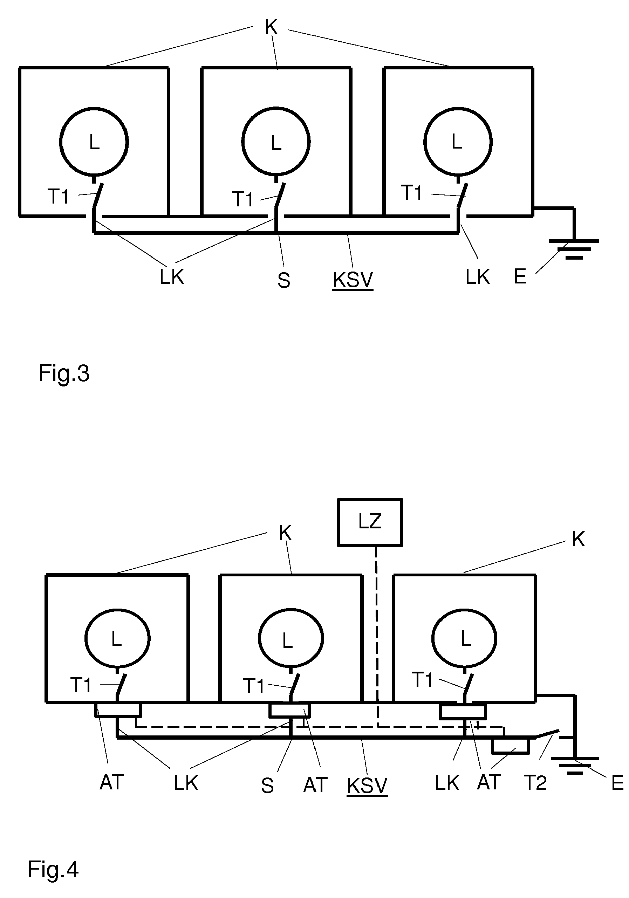

- Fig.3: eine Aufsicht auf einen entsprechend Fig.2 geführten Schnitt durch eine weitgehend formtreu dargestellte Ausführungsform des Schaltersystems nach Fig.1 mit einer motorbetätigbaren Kurzschlussverbindung, aus welchem Schnitt die geometrische Ausbildung und Anordnung der Kapselung sowie der Phasen und einer Kurzschlussverbindung dieses Schaltersystems ersichtlich sind, und
- Fig.4: eine Aufsicht auf einen entsprechend den Figuren 2 und 3 geführten Schnitt durch eine weitgehend formtreu dargestellte Ausführungsform eines dreiphasigen Schaltersystem nach der Erfindung.

### WEGE ZUR AUSFÜHRUNG DER ERFINDUNG

Das in Fig.1 einphasig dargestellte dreiphasige Generatorschaltersystem zeigt lediglich einen von drei weitgehend gleichartig ausgebildeten Schaltersystempolen P, welche parallel zueinander und zu einer horizontal geführten Achse A ausgerichtet sind. Die Pole sind in einer horizontal erstreckten Ebene angeordnet und sind im Zuge einer längs der Achse ausgerichteten Generatorableitung GA zwischen einen Generator G eines Kraftwerks und einen Transformator TR eines Hochspannungsübertragungsnetzes geschaltet. Der dargestellte Pol P ist einphasig gekapselt ausgebildet und weist eine elektrisch leitend an Erde E geführte und mit Umgebungsluft gefüllte, im allgemeinen metallene Kapselung K auf. Die Kapselung K nimmt einen parallel zur Achse A geführten Phasenleiter L auf, in den in Serie geschaltet je ein Schalterpol GP eines dreiphasigen Generatorschalters und ein Schalterpol TP eines dreiphasigen Trennschalters integriert sind. Die Kapselung nimmt ferner neben weiteren Komponenten, wie beispielsweise Strom- und Spannungswandlern und Überspannungsschutzvorrichtungen, auch zwei Erdungsschalter ES1 und ES2 auf, von denen der eine, nämlich ES1, einen generatorseitigen Stromanschluss und der andere, nämlich ES2, einen transformatorseitigen Stromanschluss des Systempols P beim Schliessen elektrisch leitend mit der Kapselung K und damit auch mit Erde E verbindet.

Mit den Bezugszeichen KSV sind zwei Kurzschlussverbindungen bezeichnet. Jede dieser beiden Kurzschlussverbindungen verbindet die Phasenleiter L der drei Phasen elektrisch leitend mit einem elektrisch isoliert angeordneten Sternpunkt S. Daher sind Verbindungsleiter LK der Kurzschlussverbindung KSV, welche den Sternpunkt S mit jeweils einem der Phasenleiter L verbinden, elektrisch isoliert durch die Kapselung K geführt und befindet sich der Sternpunkt S ausserhalb der Kapselung. Mit einer solchen Kurzschlussverbindung KSV können bei Inbetriebnahme von Kraftwerken und Schaltanlagen Sicherheitseinstellungen überprüft und mögliche Fehlerfälle simuliert werden.

Vor Inbetriebnahme des Generatorschaltersystems oder nach Unterbrechen des Betriebs dieses Systems, welches durch Abschalten des Betriebsstroms und durch nachfolgendes Erden des generator- und des transformatorseitigen Stromanschlusses der Schalterpolle P mit Hilfe der geschlossenen Erdungsschalter ES1 und ES2 erreicht wird, kann die Kurzschlussverbindung KSV manuell montiert werden. Nach Öffnen der Erdungsschalter ES1 und ES2 kann durch Schliessen der Schalterpole GP des Generatorschalters Kurzschlussstrom in die Kurzschlussverbindung KSV eingespeist werden und können nun die Simulationsversuche durchgeführt werden.

Um den Normalbetrieb des Generatorschaltersystems zu ermöglichen, ist die manuell montierte Kurzschlussverbindung nach Abschluss der Versuche wieder manuell zu demontieren. Zu diesem Zweck werden nach dem Öffnen der Schalterpole GP die Erdungsschalter ES1 und ES2 zunächst geschlossen und wird sodann die Kurzschlussverbindung KSV manuell aus dem Schaltersystem entfernt. Hierbei ist neben der Demontage der Kurzschlussverbindung auch darauf zu achten, dass Öffnungen in der Kapselung K, durch welche die Verbindungsleiter LK bei der Montage vorschriftsgemäss geführt wurden, wieder vorschriftsgemäss verschlossen werden.

Eine manuell ausgebildete Kurzschlussverbindung KSV ist in Fig.1 oberhalb der Achse A liegend dargestellt. Aus Fig.2 ist ersichtlich, dass bei einer solchen Kurzschlussverbindung jeder der drei Verbindungsleiter LK eine unterbrechungsfreie galvanische Verbindung zwischen jeweils einem der Phasenleiter L und dem Sternpunkt S gewährleistet.

In Fig.1 ist - unterhalb der Achse A liegend - auch eine weitere Kurzschlussverbindung KSV dargestellt. Diese Kurzschlussverbindung kann mit Hilfe von motorbetätigbaren Trennschaltern erreicht werden und ist in Fig.3 näher erläutert. Wie aus Fig.3 ersichtlich ist, weist diese Kurzschlussverbindung drei im Inneren der Kapselung K angeordnete Trennschalter T1 auf, welche jeweils mit einer beim Öffnen gebildeten Trennstelle in den Leiterzug je eines der drei Verbindungsleiter LK eingebaut sind. Motorbetätigtes Schliessen der Trennschalter T1 überbrückt die drei Trennstellen und bildet die für die Simulationsversuche benötigte Kurzschlussverbindung KSV, in die bei der Durchführung der Simulationsversuche durch Schliessen der aus Fig.1 ersichtlichen drei Schalterpole GP des Generatorschalters Kurzschlussstrom eingespeist wird. Nach Abschluss der Simulationsversuche werden die Schalterpole GP geöffnet und werden die Stromanschlüsse der Schaltersystempole P und die Kurzschlussverbindung KSV durch Schliessen der ebenfalls aus Fig.1 ersichtlichen Erdungsschalter ES1 und ES2 geerdet. Geschultes Montagepersonal kann nun mit Hilfe einer geeigneten Stromverbindung den Sternpunkt S konstant mit Erde E verbinden. Nach Öffnen der Trennschalter T1 und der Erdungsschalter ES1 und ES2 ist die Kurzschlussverbindung KSV unterbrochen und im ausserhalb der Kapselung liegenden Sternpunkt geerdet. Der Normalbetrieb des Generatorschaltersystems kann nun wieder aufgenommen werden.

Gegenüber dem zuvor beschriebenen Generatorschaltersystem reduziert der Einsatz der Trennschalter T1 zwar den Aufwand bei der Montage und Demontage der Kurzschlussverbindung KSV, dennoch verzögern und verteuern die noch erforderlichen Montage- und Demontagearbeiten sowohl das Ausführen der Simulationsversuche wie auch die nachfolgende Inbetriebnahme des Generatorschaltersystems erheblich.

Die in Fig.4 dargestellte Ausführungsform des Schaltersystems nach der Erfindung ist wie das zum Stand der Technik zählende System gemäss Fig.1 ebenfalls als dreiphasiges Generatorschaltersystem ausgebildet und weist daher auch die aus den Fig.1 ersichtlichen Komponenten auf, wie insbesondere Kapselung K, Phasenleiter L, Generatorschalter mit Schalterpolen GP, Kurzschlussverbindung KSV und Erdungsschalter ES1 und ES2. Es weist im Unterschied zur Ausführungsform gemäss Fig.3 jedoch noch einen einphasig ausgebildeten Trennschalter T2 auf, der beim Schliessen den Sternpunkt S elektrisch leitend mit Erde E verbindet und der bei Belastung der Kurzschussverbindung KSV mit einem Kurzschlussstrom geöffnet ist. Da dieser Trennschalter lediglich mit Erderstrom belastet wird, der kleiner bemessen ist als der bei den Simulationsversuchen in der Kurzschlussverbindung KSV fliessende maximal zulässige Kurzschlussstrom, und da die über den offenen Trennschalter T2 abfallende Spannung im allgemeinen gering ist, kann dieser Trennschalter kostengünstig als Mittelspannungsschalter mit Nennspannungen von typischerweise 10 bis 40 kV ausgeführt sein. Da bei den Versuchen die Phasen im allgemeinen gleichmässig belastet werden, wie insbesondere bei Simulationsversuchen in Kraftwerken, kann der Trennschalter T2 häufig sogar als Niederspannungsschalter ausgebildet sein. Die Trennschalter T1 können dann mit Vorteil in Verbindungsleitern LK angeordnet sein, die jeweils einen generatorseitigen Abschnitt eines der Phasenleiter L über jeweils einen der Trennschalter T1 mit dem Sternpunkt S elektrisch leitend verbinden. Der generatorseitige Abschnitt der Phasenleiter L enthält den bei der Diskussion von Fig.1 erörterten generatorseitigen Stromanschluss der Schaltersystempole P.

Beim Normalbetrieb des Schaltersystems nach Fig.4 ist der Sternpunkt S über den geschlossenen Trennschalter T2 geerdet. Sollen nun Simulationsversuche mit Kurzschlussströmen durchgeführt werden, so werden zunächst die Schalterpole GP des Generatorschalters geöffnet und danach die Trennschalter T1 geschlossen. Da die Trennschalter T1 über den geschlossenen Trennschalter T2 elektrisch leitend mit Erde E verbunden sind, bilden sie nun die Erdungsschalter ES1 und verbinden die generatorseitigen Abschnitte der drei Phasenleiter L mit Erde E. Durch nachfolgendes Öffnen des Trennschalters T2 wird sodann bei geschlossenen Trennschaltern T1 und geöffnetem Generatorschalter die Kurzschlussverbindung KSV gebildet. Durch nachfolgendes Schliessen des Generatorschalters kann in die Verbindung KSV Kurzschlussstrom eingespeist werden und können dann die Simulationsversuche durchgeführt werden.

Nach Abschluss der Versuche wird der Generatorschalter wieder geöffnet und werden sodann bei geöffnetem Generatorschalter die Trennschalter T1 geöffnet und bei geöffneten Trennschaltern T1 der Trennschalter T2 geschlossen, wodurch die Trennschalter T1 wieder die Erdungsschalter ES1 bilden und das Schaltersystem wieder bestimmungsgemäss betrieben werden kann.

Wie aus Fig.4 ersichtlich ist, weisen sowohl die drei Trennschalter T1 als auch der Trennschalter T2 jeweils einen von einer Leitzentrale LZ aus ansteuerbaren Antrieb AT zum Öffnen und Schliessen einer Trennstrecke im Verbindungsleiter LK auf. Daher können bei einem solchen Generatorschaltersystem die Simulationsversuche von der Leitzentrale aus "per Knopfdruck" ausgeführt werden und entfällt der Einsatz von geschultem Montagepersonal. Es werden so Montagekosten eingespart, zugleich aber auch durch Montage- und Demontagearbeiten bedingte Ausfallzeiten des Generatorschaltersystems vermieden.

Das Schaltersystem nach der Erfindung ist nicht auf ein gekapseltes Generatorschaltersystem beschränkt, welches zwischen einem Generator eines Kraftwerks und einem Transformator eines Hochspannungsnetzes installierbar ist, es kann auch in einer gasisolierten metallgekapselten Hochspannungsanlage verwendet werden. Der Trennschalter TR2 ist dann im allgemeinen als Hochspannungsschalter ausgebildet.

Das Schaltersystem nach der Erfindung benötigt nicht notwendigerweise eine Kapselung K und kann daher auch in Generatorableitungen installiert werden, die frei von einer Kapselung gehalten sind, oder aber auch in Freiluftschaltanlagen.

Anstelle von drei Phasenleitern kann das Schaltersystem nach der Erfindung auch vier oder mehr Phasenleiter enthalten.

### BEZUGSZEICHENLISTE

- A: Achse
- AT: Antriebe
- E: Erde
- ES1, ES2: Erdungsschalter
- F-F: Schnitt
- G: Generator
- GA: Generatorableitung
- GP: Leistungsschalterpol
- K: Kapselung
- KSV: Kurzschlussverbindung
- L: Phasenleiter
- LK: Verbindungsleiter
- LZ: Leitzentrale
- P: Schaltersystempol
- S: Sternpunkt
- TP: Trennschalterpol
- T1, T2: Trennschalter
- TR: Transformator

## Patentansprüche

1. Schaltersystem enthaltend mehrere Phasenleiter (L), einen Leistungsschalter mit mehreren Schalterpolen (GP) und eine Kurzschlussverbindung (KSV), die einen Sternpunkt (S) und mehrere im Sternpunkt zusammengeführte Verbindungsleiter (LK) aufweist, wobei jeder der Phasenleiter mit jeweils einem der Schalterpole (GP) elektrisch leitend verbunden ist, und wobei jeder Verbindungsleiter (LK) über jeweils einen von mehreren mit Kurzschlussstrom belastbaren ersten Trennschaltern (T1) mit jeweils einem der Phasenleiter (L) elektrisch leitend verbunden ist, **dadurch gekennzeichnet, dass** das Schaltersystem ferner einen zweiten Trennschalter (T2) aufweist, der beim Schliessen den Sternpunkt (S) elektrisch leitend mit Erde (E) verbindet und der bei Belastung der Kurzschlussverbindung (KSV) mit einem Kurzschlussstrom geöffnet ist.

2. Schaltersystem nach Anspruch 1, **dadurch gekennzeichnet, dass** der zweite Trennschalter (T2) mit einem Erderstrom belastbar ist, der kleiner bemessen ist als ein in der Kurzschlussverbindung (KSV) maximal zulässiger Kurzschlussstrom.

3. Schaltersystem nach einem der Ansprüche 1 oder 2, **dadurch gekennzeichnet, dass** die ersten Trennschalter (T1) und der zweite Trennschalter (T2) jeweils einen von einer Leitzentrale (LZ) aus ansteuerbareren Antrieb (AT) zum Öffnen und Schliessen einer Trennstrecke aufweisen.

4. Schaltersystem nach einem der Ansprüche 1 bis 3, **dadurch gekennzeichnet, dass** die Phasenleiter (L), die Schalterpole (GP) des Leistungsschalters und die ersten Trennschalter (T1) in einer geerdeten Kapselung (K) angeordnet sind, dass der Sternpunkt (S) ausserhalb der Kapselung (K) angeordnet ist, dass jeder der Verbindungsleiter (LK) elektrisch isoliert aus der Kapselung (K) geführt ist, und dass bei geschlossenem zweitem Trennschalter (T2) jeder der ersten Trennschalter (T1) jeweils einer von mehreren Erdungsschaltern (ES1, ES2) des Schaltersystems bildet.

5. Schaltersystem nach Anspruch 4 zum Einbau in eine zwischen einem Generator (G) und einem Transformator (TR) angeordnete Generatorableitung (GA), **dadurch gekennzeichnet, dass** jeder der Verbindungsleiter (LK) einen generatorseitigen Abschnitt jeweils eines der Phasenleiter (L) über jeweils einen der ersten Trennschalter (T1 ) mit dem Sternpunkt (S) elektrisch leitend verbindet.

6. Schaltersystem nach Anspruch 5, **dadurch gekennzeichnet, dass** der zweite Trennschalter (T2) als Mittel- oder als Niederspannungsschalter ausgebildet ist.

7. Schaltersystem nach Anspruch 4 zum Einbau in eine gasisolierte metallgekapselte Hochspannungsschaltanlage, **dadurch gekennzeichnet, dass** der zweite Trennschalter als Hochspannungsschalter ausgebildet ist.

## Claims

1. Switch system containing a plurality of phase conductors (L), a circuit breaker having a plurality of switch poles (GP), and a short-circuit link (KSV) which has a star point (S) and a plurality of link conductors (LK) which are combined at the star point, wherein each of the phase conductors is electrically conductively connected to in each case one of the switch poles (GP), and wherein each link conductor (LK) is electrically conductively connected to in each case one of the phase conductors (L) by means of in each case one of several first disconnectors (T1) to which short-circuit current can be applied, **characterized in that** the switch system further has a second disconnector (T2) which, when it is closed, electrically conductively connects the star point (S) to ground (E) and which is opened when a short-circuit current is applied to the short-circuit link (KSV).

2. Switch system according to Claim 1, **characterized in that** a ground current can be applied to the second disconnector (T2), said ground current being lower than a maximum permissible short-circuit current in the short-circuit link (KSV).

3. Switch system according to any of Claims 1 or 2, **characterized in that** the first disconnectores (T1) and the second disconnector (T2) each have a drive (AT), which can be driven by a central control system (LZ), for opening and closing an isolating gap.

4. Switch system according to one of Claims 1 to 3, **characterized in that** the phase conductors (L), the switch poles (GP) of the circuit breaker and the first disconnectores (T1) are arranged in a grounded encapsulation (K), **in that** the star point (S) is arranged outside the encapsulation (K), **in that** each of the link conductors (LK) is routed out of the encapsulation (K) in an electrically insulated manner, and **in that**, when the second disconnector (T2) is closed, each of the first disconnectores (T1) forms in each case one of several earthing switches (ES1, ES2) of the switch system.

5. Switch system according to Claim 4 for installation in an outgoing generator line (GA) which is arranged between a generator (G) and a transformer (TR), **characterized in that** each of the link conductors (LK) electrically conductively connects a generator-end section of in each case one of the phase conductors (L) to the star point (S) by means of in each case one of the first disconnectores (T1).

6. Switch system according to Claim 5, **characterized in that** the second disconnector (T2) is in the form of a medium-voltage switch or in the form of a low-voltage switch.

7. Switch system according to Claim 4 for installation in a gas-insulated metal-encapsulated high-voltage switchgear assembly, **characterized in that** the second disconnector is in the form of a high-voltage switch.

## Revendications

1. Système de commutateur contenant plusieurs conducteurs de phase (L), un commutateur de puissance pourvu de plusieurs pôles de commutateur (GP) et d'une liaison de court-circuit (KSV), qui possède un point neutre (S) et plusieurs conducteurs de liaison (LK) rassemblés au point neutre, chacun des conducteurs de phase étant relié de façon électriquement conductrice avec respectivement l'un des pôles de commutateur (GP), et chaque conducteur de liaison (LK) étant relié de façon électriquement conductrice avec respectivement l'un des conducteurs de phase (L) à chaque fois par le biais d'un parmi plusieurs premiers sectionneurs (T1) pouvant être chargés avec un courant de court-circuit, **caractérisé en ce que** le système de commutateur possède en outre un deuxième sectionneur (T2) qui, lors de la fermeture, relie de façon électriquement conductrice le point neutre (S) à la terre (E) et qui est ouvert lorsque la liaison de court-circuit (KSV) est chargée avec un courant de court-circuit.

2. Système de commutateur selon la revendication 1, **caractérisé en ce que** le deuxième sectionneur (T2) peut être chargé avec un courant de prise de terre qui est dimensionné de façon plus petite qu'un courant de court-circuit maximal admissible dans la liaison de court-circuit (KSV).

3. Système de commutateur selon la revendication 1 ou 2, **caractérisé en ce que** le premier sectionneur (T1) et le deuxième sectionneur (T2) possèdent respectivement un mécanisme d'entraînement (AT) pouvant être commandé depuis un poste de commande central (LZ) pour ouvrir et fermer un espace intercontact.

4. Système de commutateur selon l'une des revendications 1 à 3, **caractérisé en ce que** les conducteurs de phase (L), les pôles de commutateur (GP) du commutateur de puissance et les premiers sectionneurs (T1) sont disposés dans un blindage (K) relié à la terre, **en ce que** le point neutre (S) est disposé en-dehors du blindage (K), **en ce que** chacun des conducteurs de liaison (LK) est guidé hors du blindage (K) en étant isolé électriquement, et **en ce que** lorsque le deuxième sectionneur (T2) est fermé, chacun des premiers sectionneurs (T1) forme respectivement un parmi plusieurs commutateurs de mise à la terre (ES1, ES2) du système de commutateur.

5. Système de commutateur selon la revendication 4 destiné à être installé dans une ligne de départ de générateur (GA) disposée entre un générateur (G) et un transformateur (TR), **caractérisé en ce que** chacun des conducteurs de liaison (LK) relie de façon électriquement conductrice au point neutre (S) une portion côté générateur respectivement de l'un des conducteurs de phase (L) à chaque fois par le biais de l'un des premiers sectionneurs (T1).

6. Système de commutateur selon la revendication 5, **caractérisé en ce que** le deuxième sectionneur (T2) est réalisé sous la forme d'un commutateur à moyenne ou basse tension.

7. Système de commutateur selon la revendication 4 destiné à être installé dans un équipement de commutation à haute tension sous blindage métallique isolé au gaz, **caractérisé en ce que** le deuxième sectionneur est réalisé sous la forme d'un commutateur haute tension.
